# EUROPEAN PATENT APPLICATION

(11) **EP 4 814 299 A1**
(43) Date of publication of application: **30.09.2026**
(21) Application number: 25382306.6
(22) Date of filing: 28.03.2025
(51) Int. Cl.: F03D 7/02

(54) **WIND TURBINE YAW CONTROL**

(71) Applicant: Nordex Energy Spain, S.A.U., 31395 Barasoain (Navarra) (ES)
(72) Inventor: ARLABÁN GABEIRAS, Teresa, 31395 Barasoain (ES)
(74) Representative: Elion IP, S.L.

(57) **Abstract**

A method including yawing a nacelle yaw system of at least one wind turbine for orienting a nacelle of the at least one wind turbine according to a first yaw setpoint when the at least one wind turbine operates in a first operating mode, the first yaw setpoint being at least based on a wind direction at a location of the at least one wind turbine or a wind farm comprising the at least one wind turbine. The method also includes yawing the nacelle yaw system for orienting the nacelle according to a second yaw setpoint when the at least one wind turbine operates in a second operating mode that precedes a non-operational period comprising unavailability for performing a yaw maneuver. Also, a data processing device or system, a control system, a wind turbine, a wind farm and a computer program.

## Description

### TECHNICAL FIELD

The present disclosure relates to the field of wind turbines. More particularly, the present disclosure relates to, but is not limited to, control systems, wind turbines and methods associated therewith for reducing undesirable conditions, such as fatigue loads, on components of one or more wind turbines, in particular in some situations.

### BACKGROUND

Wind turbine components, during normal operation of the wind turbine, are subjected to vibrations, oscillations and/or mechanical stress. In some occasions, there is uneven loading on the wind turbine, which leads to accelerated wear and tear on key components such as bearings, gearboxes, and rotor hubs. Accordingly, there may also be times during which it could be convenient to have wind turbines oriented in a particular way to reduce vibrations, oscillations and/or mechanical stress in components thereof, such as a tower, or to avoid risky conditions when maintenance may be conducted or during pre-commissioning, or commissioning, of wind turbines.

Furthermore, when there are wind gusts, the wind gusts can exert unpredictable and varying forces on turbine blades that are not properly oriented. Over time, stress increases the likelihood of mechanical failures, requiring more frequent maintenance and shortening the lifespan of wind turbines.

Unproperly-oriented wind turbines, depending on wind inflow, can also pose safety risks. The loads exerted on the wind turbines may cause the blades thereof to enter a state of aerodynamic instability, producing oscillations due to, e.g., vortex shedding, which may lead to failures, such as breaking of components or even blade detachment. These failures not only result in expensive repairs and long downtimes but, as aforesaid, become a safety threat.

In addition to the aforesaid problems that wind turbines may be exposed to, the tower of the wind turbine may also have its structural integrity compromised during uneven loadings events on the wind turbine owing to, e.g., vortex-induced vibrations. Such a problem is exacerbated when the wind turbines repeatedly experience asymmetric forces.

### SUMMARY

An aspect of the disclosure relates to a method including yawing a nacelle yaw system of at least one wind turbine for orienting a nacelle of the at least one wind turbine according to a first yaw setpoint for the nacelle when the at least one wind turbine operates in a first operating mode. The method also includes yawing the nacelle yaw system for orienting the nacelle according to a second yaw setpoint for the nacelle when the at least one wind turbine operates in a second operating mode that precedes a non-operational period including unavailability for performing a yaw maneuver.

Another aspect of the disclosure relates to a control system for at least one wind turbine. The control system at least includes: a first operating mode and a second operating mode. The first operating mode includes yawing a nacelle yaw system of the at least one wind turbine for orienting a nacelle of the at least one wind turbine according to a first yaw setpoint for the nacelle. The second operating mode includes yawing the nacelle yaw system for orienting the nacelle according to a second yaw setpoint for the nacelle. The second operating mode precedes a non-operational period including unavailability for performing a yaw maneuver.

Another aspect of the disclosure relates to a wind turbine including a nacelle, a nacelle yaw system configured to modify a yaw angle of the nacelle and a wind turbine controller. The wind turbine controller is configured to yaw the nacelle yaw system for orienting the nacelle according to a first yaw setpoint for the nacelle when the control system operates the wind turbine according to a first operating mode. The wind turbine controller is also configured to yaw the nacelle yaw system for orienting the nacelle according to a second yaw setpoint for the nacelle when the control system operates the wind turbine according to a second operating mode that precedes a non-operational period including unavailability for performing a yaw maneuver.

Another aspect of the disclosure relates to a wind farm including a plurality of wind turbines. Each wind turbine of the plurality of wind turbines includes a nacelle, a nacelle yaw system configured to modify a yaw angle of the nacelle, and a wind turbine controller. The wind turbine controller is configured to yaw the nacelle yaw system for orienting the nacelle according to a first yaw setpoint for the nacelle when the control system operates the wind turbine according to a first operating mode. The wind turbine controller is also configured to yaw the nacelle yaw system for orienting the nacelle according to a second yaw setpoint for the nacelle when the control system operates the wind turbine according to a second operating mode that precedes a non-operational period including unavailability for performing a yaw maneuver.

Another aspect of the disclosure relates to a non-transitory computer-readable storage medium including instructions, or a computer program including instructions, the instructions at least causing one or more computing devices: to yaw a nacelle yaw system of at least one wind turbine for orienting a nacelle of the at least one wind turbine according to a first yaw setpoint for the nacelle when the at least one wind turbine operates in a first operating mode; and to yaw the nacelle yaw system for orienting the nacelle according to a second yaw setpoint for the nacelle when the at least one wind turbine operates in a second operating mode that precedes a non-operational period including unavailability for performing a yaw maneuver.

Another aspect of the disclosure relates to a method including causing a nacelle yaw system of at least one wind turbine to be oriented such that a nacelle of the at least one wind turbine is oriented according to a first yaw setpoint for the nacelle when the at least one wind turbine is in a first operating mode; causing reorientation of the nacelle yaw system such that the nacelle is reoriented according to a second yaw setpoint for the nacelle at least when the at least one wind turbine is in a second operating mode; and switch between the first operating mode of the at least one wind turbine and the second operating based upon determination of existence of a future situation potentially causing unavailability for performing a yaw maneuver by the nacelle yaw system.

Another aspect of the disclosure relates to a non-transitory computer-readable storage medium including instructions, or a computer program including instructions, the instructions at least causing one or more computing devices: to cause a nacelle yaw system of at least one wind turbine to be oriented such that a nacelle of the at least one wind turbine is oriented according to a first yaw setpoint for the nacelle when the at least one wind turbine is in a first operating mode; to cause reorientation of the nacelle yaw system such that the nacelle is reoriented according to a second yaw setpoint for the nacelle at least when the at least one wind turbine is in a second operating mode; and to switch between the first operating mode of the at least one wind turbine and the second operating mode based upon determination of existence of a future situation potentially causing unavailability for performing a yaw maneuver by the nacelle yaw system.

Another aspect of the disclosure relates to a method including yawing a nacelle yaw system of at least one wind turbine for orienting a nacelle of the at least one wind turbine according to a yaw setpoint for the nacelle, when the nacelle is oriented according to a yaw angle different from the yaw setpoint. In some cases, the yawing is conducted when the at least one wind turbine is in a pre-commissioning or commissioning stage, and/or prior to a non-operational period including unavailability for performing a yaw maneuver.

Another aspect of the disclosure relates to a non-transitory computer-readable storage medium including instructions, or a computer program including instructions, the instructions at least causing one or more computing devices: to cause a nacelle yaw system of at least one wind turbine to be oriented or reoriented such that a nacelle of the at least one wind turbine is oriented according to a yaw setpoint for the nacelle, when the nacelle is oriented according to a yaw angle different from the yaw setpoint. In some cases, the yawing is conducted when the at least one wind turbine is in a pre-commissioning or commissioning stage, and/or prior to a non-operational period including unavailability for performing a yaw maneuver.

Additional advantages and features of the present disclosure will become apparent from the detailed description that follows.

### BRIEF DESCRIPTION OF THE DRAWINGS

To complete the description and in order to provide for a better understanding of the disclosure, a set of drawings is provided. Said drawings form an integral part of the description and illustrate examples of the disclosure, which should not be interpreted as restricting the scope of the disclosure, but just as examples of how the disclosure can be carried out. The drawings comprise the following figures:
Figure 1 shows a wind turbine in accordance with some examples.
Figure 2 shows a control system for at least one wind turbine in accordance with some examples.
Figure 3 shows a method in accordance with some examples.
Figure 4 shows a method in accordance with some examples.
Figure 5 shows yawing of at least one wind turbine in accordance with some examples.
Figure 6 shows yawing of at least one wind turbine in accordance with some examples.
Figure 7 shows wind directions for determining a first yaw setpoint and/or a second yaw setpoint in accordance with some examples.
Figure 8 shows wind directions for determining a first yaw setpoint and/or a second yaw setpoint in accordance with some examples.
Figure 9 shows a method in accordance with some examples.

### DETAILED DESCRIPTION

The different aspects and examples described in the foregoing and down below may be combined with one another unless indicated otherwise. For the sake of clarity only, in the following examples reference will be made to methods, but it will be understood that the examples are likewise applicable to the other aspects (i.e., control system, wind turbine, wind farm, non-transitory computer-readable storage medium, computer program) unless indicated otherwise.

In some examples, for operation of at least one wind turbine, a first operating mode is considered. In the first operating mode, the nacelle of the at least one wind turbine is yawed, by way of the nacelle yaw system of the at least one wind turbine, to have a yaw angle equal to, or as close as possible to, a first yaw setpoint.

Further in these examples, for the operation of the at least one wind turbine with a reduction in undesirable conditions, a second operating mode is also considered. In the second operating mode, the at least one wind turbine is to be configured so as to avoid reaching a non-operational period in which the wind turbine or turbines are not properly yawed by the time there is a non-operational period that at least prevents yawing of the nacelle yaw system. Hence, in the second operating mode, yawing of the nacelle yaw system occurs prior to the non-operational period, i.e., a potential future situation preventing such yawing.

Unavailability of yawing the nacelle yaw system may be due to any cause that forbids yawing, for example, grid loss, lack of autonomous or independent electrical energy supply, components of the nacelle yaw system being damaged or out of order, operation of the nacelle yaw system being halted due to risk of fatal failure, ice embracing the nacelle yaw system, pre-commissioning or commissioning of the at least one wind turbine with no connection to grid, etc.

With at least these first and second operating modes, the at least one wind turbine may be operated to produce electric power when there is no expected non-operational period that could cause unavailability or impossibility of yawing of the nacelle yaw system to a second yaw setpoint, and to reach such second yaw setpoint ahead of the expected non-operational period.

In some examples, the first yaw setpoint is at least based on a wind direction of wind where the at least one wind turbine is located, or where the wind farm with the at least one wind turbine is located. Accordingly, in such cases, in the first operating mode, generation of electric power from wind is sought. The wind direction may correspond to the direction of current wind or recent wind, i.e., wind at the time the determination is made, or wind being present in the last, e.g., thirty seconds or less, one minute or less, two minutes or less, four minutes or less, etc. When wind direction is considered for at least one yaw setpoint, the wind direction is established, for example, from sensor measurements of a sensor configured to measure wind, or a signal, such as an electrical signal, an optical signal, etc., with data indicative of the wind direction.

In some examples, the second yaw setpoint is configured to prevent and/or reduce vibrations (e.g., vortex-induced vibrations) and/or oscillations of, at least, a tower of at least one wind turbine, in particular in at least one time period during which the nacelle yaw system cannot yaw, i.e., a non-operational period. Other components of the at least one wind turbine have also vibrations and/or oscillations prevented and/or reduced in some examples. That is to say, in some examples, a method, a control system, a wind turbine, a wind farm, a non-transitory computer-readable storage medium and a computer program according to the present disclosure are suitable for preventing, and/or reducing, vibrations and/or oscillations of at least a tower of at least one wind turbine.

Additionally, or alternatively, in some examples, the second yaw setpoint is configured to reduce undesirable conditions such as, e.g., mechanical stress of the at least one wind turbine, in particular in at least one time period during which the nacelle yaw system cannot yaw. Other components of the at least one wind turbine have also mechanical stress reduced in some examples. That is to say, in some examples, a method, a control system, a wind turbine, a wind farm, a non-transitory computer-readable storage medium and a computer program according to the present disclosure are suitable for reducing mechanical stress of at least one wind turbine.

In some examples, to reduce undesirable conditions such as, e.g., mechanical stress of the at least one wind turbine, in situations such as, for example but without limitation, when the at least one wind turbine is in a pre-commissioning or commissioning stage and a nacelle thereof is oriented according to a yaw angle different from a yaw setpoint for reducing such undesirable conditions, the nacelle is oriented or reoriented according to the yaw angle. Accordingly, the nacelle is yawed to have a yaw angle equal to, or as close as possible to, the yaw setpoint. In some cases, such yawing for orienting or re-orienting is conducted prior to a non-operational period including unavailability for performing a yaw maneuver. The non-operational period may be, for instance, at least one predetermined weather condition that could pose a risk to the safety of the at least one wind turbine or the safety of personnel working on the at least one wind turbine, such as during erection of the wind turbine.

Further, in some of these examples, the at least one wind turbine has such yawing established as an operating mode, like, for example, the second operating mode described before. In this sense, in some examples, the at least one wind turbine also has one or more additional operating modes, like, for example, the first operating mode described before. Therefore, prior to the yawing according to the yaw setpoint, the nacelle may have a yaw angle manually established or corresponding to that established by another operating mode, like the first operating mode above.

The yaw setpoint may be set according to the second yaw setpoint described before. The yaw setpoint is preferably configured to prevent and/or reduce mechanical stresses and/or vibrations and/or oscillations of, at least, a tower of at least one wind turbine, including during at least one time period during which the nacelle yaw system cannot yaw if the nacelle has been yawed ahead of a non-operational period. To this end, in some cases, the yaw setpoint is at least based on the wind direction as disclosed before.

In some examples, existence of the non-operational period is determined.

One or more streams of data are processed to determine whether a future situation may occur, which may cause a non-operational period, that would benefit from a change in yaw of part of the wind turbine. By way of example, the one or more streams of data, which may have different sources comprise one or more of, e.g., meteorological data, grid data, wind turbine operation data, wind turbine maintenance data, to name a few.

For determination of the existence of the potential non-operational period, one or more criteria may be set and, optionally, configured, which are then used for establishing whether the potential non-operational period exists. Suitable criteria known in the art are possible; for example, the one or more criteria may comprise, e.g., one or more thresholds, one or more flags indicative of existence of a certain condition, etc. By way of example, the wind turbine maintenance data may be processed to find a flag indicative of upcoming onsite maintenance tasks, or that upcoming onsite maintenance tasks are to take place in a time not greater than a time threshold. By the same token, in another example, the grid data may include a flag indicative of a likely or expected service disruption. By way of yet another example, the meteorological data may be processed to identify a forecast of a highly probable low temperature condition in that is to take place in a time not greater than a time threshold.

In some examples, a probability of existence of the non-operational period is determined.

In addition to determining whether a given future non-operational period may occur, a probability representative of the likelihood of existence of the future non-operational period is also determined. When the probability exceeds a configurable threshold like, for example but without limitation, 80% or greater, or 90% or greater, etc., it is determined that the potential future non-operational period exists.

The probability is computed based on data that is included in the one or more streams of data. To name a few examples, weather forecasts may include a probability or confidence of the forecast, a planned maintenance task is expected to take place when operators are registered for the maintenance task, a probability of a bearing in a rotor of a wind turbine breaking increases progressively over time, etc.

In some examples, the non-operational period includes: maintenance stoppage of the at least one wind turbine, or a pre-commissioning stage of the at least one wind turbine, or existence of grid loss of the at least one wind turbine, or at least one predetermined weather condition or grid condition.

In some examples, the first yaw setpoint is determined.

In some examples, the second yaw setpoint or the yaw setpoint is determined.

The second yaw setpoint or the yaw setpoint may be calculated based on one or more streams of data. The second yaw setpoint or the yaw setpoint is preferably determined so as to bring the nacelle of the wind turbine or turbines to a yaw angle that reduces or minimizes the probability of vortex-induced vibrations in the tower, mechanical stress and/or loads exerted thereon and/or uneven loading thereon.

In some examples, the second yaw setpoint or the yaw setpoint is based on a probability, such as, e.g., a relative probability of a tower of each wind turbine of the at least one wind turbine of being subjected to vibrations and/or oscillations in the non-operational period.

By way of example, historical values, simulation software, a machine learning algorithm, or a combination thereof may be used to determine probabilities of the tower experiencing vibrations and/or oscillations of an intensity above a certain value based on an orientation of a nacelle. The second yaw setpoint or the yaw setpoint may be established such that the value thereof is the value, or one of the values, that would result in least vibrations and/or oscillations according to the probability associated therewith.

In some examples, forecasted values for an average wind direction during at least one potential future non-operational period starting in a near time horizon, e.g. within seconds or minutes, are updated and/or stored, preferably in a continuous manner.

For example, values for the average wind direction for the future, e.g., 6h-, 12h-, 24h-, 48h-long periods are stored and updated every, e.g., 1 minute, 10 minutes, or other periods. If a non-operational period is starting in the next, e.g., 2 minutes, based on the estimated length of the period, the yaw system yaws the nacelle to be aligned with the forecasted value for the average wind direction for the future non-operational period.

The yawing of the nacelle yaw system according to the second yaw setpoint or the yaw setpoint may be started based on the time it takes the nacelle yaw system to reach said yaw setpoint from a current yaw angle and the yawing speed. Moreover, the yawing may not be at the maximum yawing speed of the nacelle yaw system and/or it may be started with more time in advance than the time actually needed to perform the yawing, thereby providing a time margin.

In some examples, the second yaw setpoint or the yaw setpoint is at least based on statistical wind direction data at the location and/or an estimation of a value of a future wind direction data at the location during the non-operational period, namely, forecasted wind direction data at the location in a future time span.

The statistical wind direction data provides a single wind direction or a set of wind directions that are most likely to exist in the future time span. A single wind direction may be provided upon processing different possible wind directions and establishing which of the wind directions is most likely from a statistical standpoint. The second yaw set point or the yaw setpoint is then based on the single wind direction provided as explained.

The future time span encompasses, in some examples, a time period during which the non-operational period is determined to exist in the future.

The forecast of wind direction, which is an estimation of one or more values of a future wind direction, is representative of the direction along which the wind is expected to blow when yawing is not possible. A second yaw setpoint or a yaw setpoint based on such forecasted wind direction might reduce the loads that the at least one wind turbine will be subjected to during the future time span.

In some examples, the statistical wind direction data and the estimation of the value of the future wind direction data are based on a period of time in a year corresponding to a time of potential occurrence of the non-operational period. That is to say, the statistical wind direction data and the estimation of the value of the future wind direction data are based on the time period within the year corresponding to the time period within the year in which the non-operational period may potentially occur.

The wind direction typically varies depending on the time of the year (e.g., season, month, week, etc.) at each particular location. By considering when the non-operational period may take place and using that time to establish the wind direction for the second yaw setpoint or the yaw setpoint, the loads exerted on the at least one wind turbine may be made smaller or less intense.

In some examples, the second yaw setpoint is at least based on a duration of the non-operational period.

Shorter or longer periods, i.e., situations, during which yawing is not possible might influence the determination of the second yaw setpoint or the yaw setpoint. In this sense, shorter periods may cause, for example, a determination of a second yaw setpoint or a yaw setpoint that is less optimal in terms of minimizing the loads exerted on the at least one wind turbine and/or tower(s) thereof, as opposed to longer periods in which larger reduction of loads causes a more significant improvement on the useful life of the at least one wind turbine and/or tower(s) thereof.

In less-long future periods, the reduction in vibrations and/or oscillations and/or mechanical stresses attained by yawing the nacelle to a better but sub-optimal yaw angle allows a longer time in the first operating mode, or have the first yaw setpoint be determined to a less optimal setpoint prior to turning to the second operating mode. Namely, the wind turbine may stay longer in the first operating mode or have, partially, a less optimal yaw setpoint for electric power generation, and turn to the second operating mode at a time closer to occurrence of the potential future period in which electric power generation is generally not sought. Experiencing some vibrations and/or oscillations and/or mechanical stress for a short time duration may be acceptable as long as the loads are within a predetermined acceptable level and the duration is within a predetermined acceptable duration. By contrast, longer periods could damage the wind turbine considerably, and so optimizing the second yaw setpoint or the yaw setpoint in these periods is convenient.

In some examples, the second yaw setpoint or the yaw setpoint is selected from a plurality of second yaw setpoints or a plurality of yaw setpoints. The second yaw setpoint or the yaw setpoint is selected at least based on the duration of the non-operational period.

In some examples, the duration of the non-operational period is determined at least based on a root cause leading to the non-operational period.

The one or more streams of data considered for determination of the non-operational period may also include data that, upon processing, may reveal what is the root cause for the non-operational period. Establishing the root cause may be convenient for determining the duration of the non-operational period. The determination of the duration may be based on historical data.

Assessment of different elements of data in a combined manner, e.g., taking into account the relevance of each element of data, how one element of data relates to other elements of data, etc., causes a computation of a likely duration or range of likely duration of the future non-operational period. By way of example, a planned maintenance stoppage for replacement of bearings in a wind rotor when freezing temperatures are expected to be present at the location of the wind turbine in the next, e.g., four days may cause determination of a time duration of, e.g., six to eight days.

In some examples, the root cause leading to the non-operational period is obtained.

The root cause may be determined or received at, e.g., a control system of the wind turbine. For example, the root cause may be manually introduced by an operator.

In some examples, operation of the at least one wind turbine is switched, for example selectively, between the first operating mode and the second operating mode based on the non-operational period. In some of these examples, in particular, the switching is based on the determined existence of the future non-operational period.

The at least one wind turbine is controlled such that operation thereof is switched between the first and second operating modes depending on whether there is a potential future non-operational period, especially if there is a potential future non-operational period that may take place in a future time span starting in less than a predetermined time horizon. That is to say, a non-operational period still too distant in time (for example, but without limitation, twenty minutes or more, one hour or more, two hours or more) is not considered for switching the operation of the at least one wind turbine to the second operating mode. Rather, the wind turbine is maintained in the first operating mode for producing electric power.

Switching from the first mode to the second mode makes the yaw system of the wind turbine to be controlled based on the second yaw set point instead of on the first yaw set point, e.g., to align the nacelle towards the future estimated wind direction instead of aligning it towards the first yaw set point calculated based on current/recent wind direction measurements.

In occasions in which, following the switching to the second operating mode, the non-operational period takes place (e.g., grid loss), once said period ends, operation of the at least one wind turbine may be switched to the first operating mode, especially if there is no further non-operational period, or at least not in an immediate future (e.g., twenty minutes or less, one hour or less, two hours or less) that may warrant yawing the nacelle yaw system according to the second yaw setpoint (which may be the same as before, or a new second yaw setpoint).

In some examples, one or several yawing operations of the nacelle yaw system is/are triggered by at least one processor such as at least one wind turbine controller based on the determinations the at least one processor or controller makes, like as established in operating modes. That is to say, the one or several yawing operations may be triggered automatically.

In some examples, one or several yawing operations of the nacelle yaw system is/are triggered by at least one user, e.g., through a user input means like, e.g., a keyboard, a touchscreen, a portable device, etc. For instance, when a wind turbine is in a pre-commissioning or commissioning state, personnel may manually digitally instruct conducting the yawing of the nacelle yaw system.

In some examples, a method according to the present disclosure is a computer-implemented method.

The method may run in one or more processors or controllers, in an isolated manner and/or in a distributed manner. That is to say, one, some or all steps may be run by a same processor or controller, or one or some steps may be run by one processor or controller and some other step or steps may be run by one or more other processors or controllers or even be run in distributed manner, which means that several processors or controllers cooperate to run one or more steps. In this sense, the steps are digitally run.

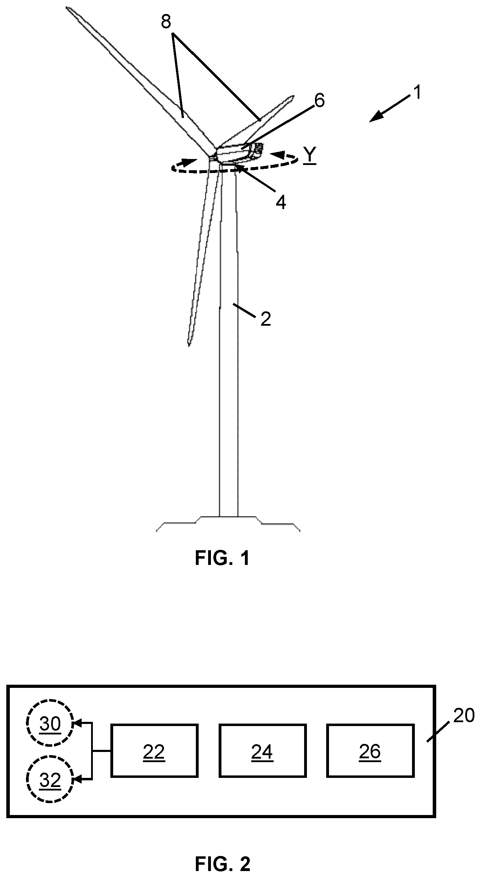

Figure 1 shows a wind turbine 1 in accordance with some examples.

The wind turbine 1 includes a tower 2, a nacelle yaw system 4 with a nacelle 6 coupled therewith, and a rotor coupled with the nacelle 6 and including a plurality of blades 8.

Upon controlling operation of the wind turbine 1, the nacelle yaw system 4 may be oriented and reoriented according to a yaw direction Y, which may be within a horizontal plane and/or an azimuth direction, for example. The nacelle 6 is yawed by the nacelle yaw system 4, thereby orienting the rotor and the blades 8 thereof accordingly.

The yawing of the nacelle 6 is convenient for, inter alia, orienting the blades 8 so that production of electric power from wind is achieved. The yawing of the nacelle 6 is also convenient for, in other occasions, orienting the nacelle 6 and the blades 8 to reduce vibrations and/or oscillations and/or mechanical stresses on components thereof and/or on the tower 1.

Figure 2 shows a control system 20 for at least one wind turbine in accordance with some examples.

The control system 20 includes at least one processor 22 and at least one memory 24. The at least one memory 24 is configured, together with the at least one processor 22, to at least implement a first operating mode 30 and a second operating mode 32 for one or more wind turbines. The control system 20 also includes a data communications module 26 that enables transmission of, e.g., control commands for orienting at least one nacelle yaw system of the at least one wind turbine. In some cases, the data communications module 26 also enables reception of, e.g., data streams, by way of one or more signals, with information for controlling operation of the at least one wind turbine. The one or more data streams received may relate to wind data, operational data, maintenance data, grid status data, to name a few.

The first operating mode 30 causes yawing of the at least one nacelle yaw system so that at least one nacelle coupled therewith is oriented in a specific manner. More particularly, the yawing of the first operating mode 30 is so as to reach a first yaw setpoint for the yaw angle of the nacelle with respect to a given reference (for example but without limitation, a local axis of the respective wind turbine, a magnetic north, etc.). The first yaw setpoint may be configured as a setpoint for the nacelle, i.e., the yaw angle that the nacelle shall have, or as a setpoint for the nacelle yaw system. Since the nacelle and the nacelle yaw system are coupled therewith with yaw angles thereof known, regardless of the definition of the first yaw setpoint, the both the nacelle and the nacelle yaw system are yawed based on the first yaw setpoint.

By the same token, the second operating mode 32 causes yawing of the at least one nacelle yaw system so that the at least one nacelle coupled therewith is oriented in a specific manner, particularly according to a second yaw setpoint. The second yaw setpoint may likewise be configured as a setpoint for the nacelle or as a setpoint for the nacelle yaw system.

The yaw setpoint of the first operating mode 30, i.e., the first yaw setpoint, is, in some examples, at least based on a wind direction at a location of the at least one wind turbine or a wind farm with the at least one wind turbine.

The yaw setpoint of the second operating mode 32, i.e., the second yaw setpoint, is preferably configured to prevent and/or reduce vibrations and/or oscillations and/or mechanical stress on the at least one wind turbine, preferably at least during a non-operational period during which yawing of the nacelle yaw system (and, thus, of the nacelle) is not available or possible.

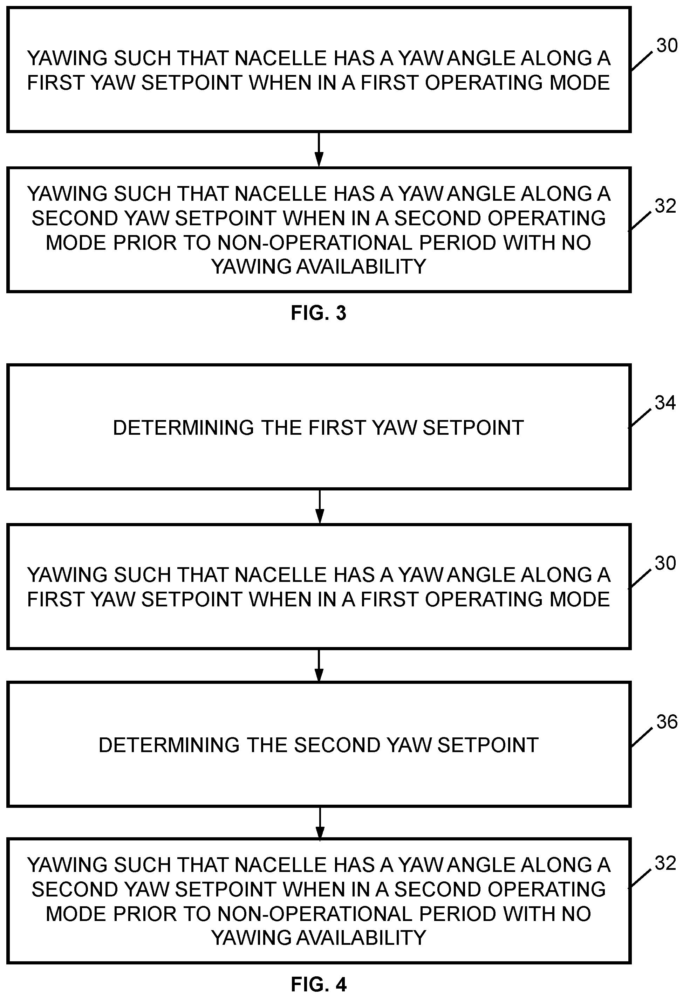

Figure 3 shows a method in accordance with some examples.

The method includes a step of yawing 30 a nacelle yaw system, which causes orientation or reorientation of a nacelle towards a first yaw setpoint. The yawing 30 according to the first yaw setpoint is conducted at least when the at least one wind turbine operates in a first operating mode in which production of electric power is sought.

The method at least also includes a step of yawing 32 the nacelle yaw system, which causes orientation or reorientation of the nacelle towards a second yaw setpoint. The yawing 32 according to the second yaw setpoint is conducted at least when the at least one wind turbine operates in a second operating mode in which one or more turbines that have a nacelle yaw system thereof oriented are to be put in a configuration intended to protect the one or more wind turbines from vibrations and/or oscillations and/or mechanical stresses, especially when yawing will not be possible.

Figure 4 shows a method in accordance with some examples.

In addition to the yawing 30, 32 of the nacelle yaw system according to the first and second setpoints, the method at least also includes a step of determining 34 the first yaw setpoint, for example based on a current or recent direction of wind at a location of the wind turbine(s) or wind farm of the wind turbine(s), and a step of determining 36 the second yaw setpoint, for example to a yaw setpoint configured to prevent and/or reduce vibrations and/or oscillations and/or mechanical stresses of the wind turbine(s) and/or components thereof.

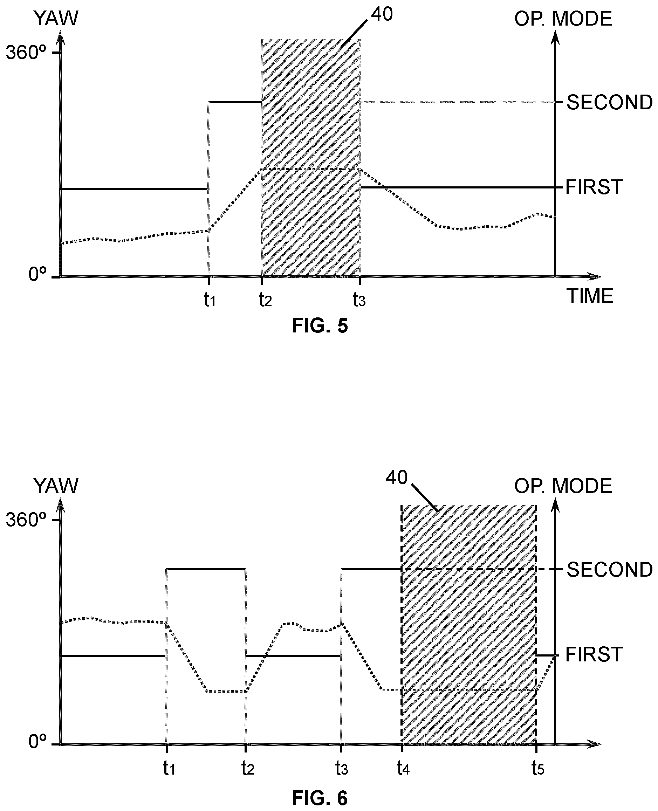

Figure 5 shows a graph diagrammatically illustrating yawing of at least one wind turbine in accordance with some examples.

The graph represented shows a time evolution of yawing (illustrated with a dotted curve) of the at least one wind turbine. Application to the at least one wind turbine of a particular operating mode is also represented (illustrated with a solid line).

During the initial time represented, the at least one wind turbine is operated according to a first operating mode intended to make the wind turbine(s) generate electric power. The yaw angle of the nacelle of each wind turbine is, preferably, modified while the wind turbines are operating according to the first operating mode. When a yaw setpoint for the first operating mode is based on wind direction, wind changes may cause determination of a new, fresher yaw setpoint for the first operating mode, causing reorientation of the wind turbine(s) to maximize power production.

When a potential future situation 40 that could make yawing unavailable, such as a non-operational period, is determined to exist, and it is expected to occur in a future time span starting in less than a predetermined time horizon, operation of the at least one wind turbine may be switched (at time t₁) to a second operating mode intended to protect the wind turbine(s). The yaw angle of the nacelle of each wind turbine is modified to reach a yaw setpoint configured to provide such protection to the wind turbines. In some examples, the at least one wind turbine is yawed at a maximum speed supported by the nacelle yaw system to reduce the likelihood of the nacelle not being properly yawed by the time the potential future situation 40 could start.

When the potential future situation 40 exists and actually takes place (at time t₂), yawing of the at least one wind turbine is not possible and remains the same, aside from yaw angle modifications owing to, e.g., wind gusts. Once the situation 40 ends (at time t₃), if no more such situations are foreseen, or at least not occurring in a future time span starting in less than a predetermined time horizon, the at least one wind turbine may be operated again according to some operating mode, such as the first operating mode, and yaw the nacelle accordingly, for instance to produce electric power once again.

Figure 6 shows a graph diagrammatically illustrating yawing of at least one wind turbine in accordance with some examples.

Like in Figure 5, the operating mode applied to the at least one wind turbine is illustrated with a solid line and the yaw angle of the nacelle is illustrated with a dashed line.

In these examples, the at least wind turbine is first operated according to a first operating mode and then switched to a second operating mode (at time t₁) upon determining that a potential future situation 40 preventing yawing exists.

Although the potential future situation 40 was expected to take place between time t₂ and time t₃, the situation 40 did not actually take place. Upon determining (at time t₃) that the potential future situation was not happening, the at least one wind turbine is switched to the first operating mode, causing reorientation in yaw angle of the nacelle.

At time t₃ it is again determined that there is a potential future situation 40 occurring soon (e.g., at time t₄ or at a time close thereto), hence the operation of the at least one wind turbine is once again switched to the second operating mode.

In this case, the potential future situation 40 actually takes place (at time t₄), during which no yawing is possible. After the situation 40 has finished (at time t₅), the at least one wind turbine is operated again, for example according to the first operating mode.

It will be noted that the time axis of Figures 5 and 6 does not accurately represent the time according to which the at least one wind turbine is operated. Generally, yawing of a nacelle in the second operating mode lasts few seconds or few minutes (e.g., thirty seconds or less, two minutes or less, ten minutes or less, etc.), whereas non-operational periods corresponding to the potential future situations 40 last much longer, e.g., two hours or more, ten hours or more, one day or more, four days or more, etc. The graphs of Figures 5 and 6 are intended to illustrate in a clear manner how application of operating modes and yawing may be conducted.

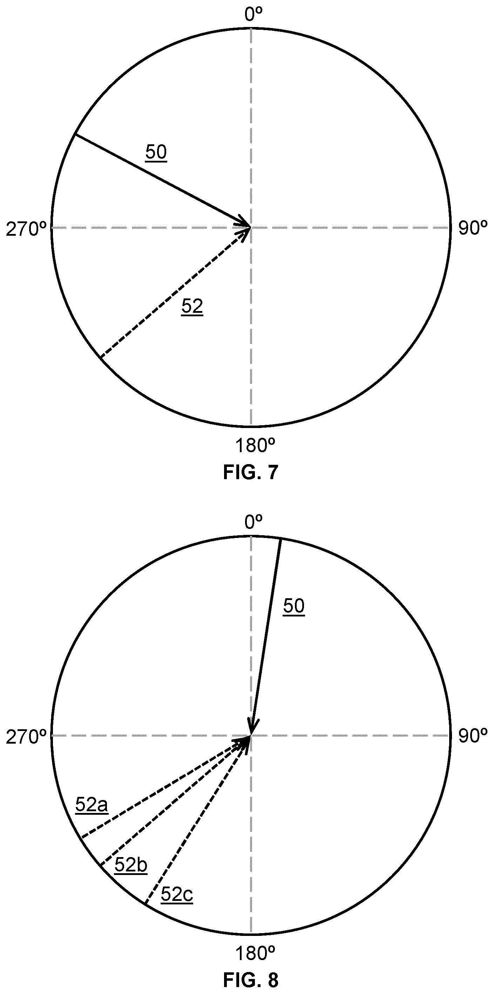

Figure 7 shows wind directions for determining a first yaw setpoint and/or a second yaw setpoint in accordance with some examples.

A circular diagram is represented with illustrative orientation degrees corresponding to, for example, heading or azimuth.

A first direction 50 of wind during a normal operating situation, which may cause operation of at least one wind turbine according to a first operating mode, is determined or measured. The first direction 50 is used for determining a yaw setpoint for the first operating mode.

By the same token, a second direction 52 of wind expected for non-operational period situation, which may cause operation of at least one wind turbine according to a second operating mode, is determined or measured (in the past, for example, and be provided as historical values and/or statistical values). The second direction 50, 52 is used for determining a yaw setpoint for the second operating mode.

The yaw setpoints determined based, or at least based, on the first and second directions 50, 52 do not have to coincide with the first and second directions 50, 52. As known in the art, depending on a sought performance of the at least one wind turbine, other parameters such as, e.g., pitch of blades, wear of components, wind intensity, etc., the yaw setpoints may be different to the first and second directions 50, 52. In some examples, the yaw setpoints are aligned or substantially aligned (there is a yaw angle difference of, e.g., 20 degrees or less, 10 degrees or less, 5 degrees or less, or 2 degrees or less) with the wind direction.

Figure 8 shows wind directions for determining a first yaw setpoint and/or a second yaw setpoint in accordance with some examples.

Like in Figure 7, a first direction 50 of wind is represented. Also, a plurality of second directions 52a, 52b, 52 of wind are represented, all of which are potential wind directions for a non-operational period.

Since determination of the actual wind direction in the non-operational period cannot be used for yawing, during that non-operational period, the nacelle due to the unavailability of yaw maneuvers, the wind direction in that non-operational period is to be determined ahead of the non-operational period, thus forecasted.

Historical values, statistical values and/or values obtained from a simulation may be provided for the second directions 52a, 52b, 52c of the wind. Although not illustrated, each of the second directions 52a, 52b, 52c may have a probability of occurrence associated therewith. Therefore, one or more of the second directions 52a, 52b, 52c are taken into account, in some examples, to establish a yaw setpoint for a second operating mode and, thus, cause the nacelle to be reoriented based on the yaw setpoint.

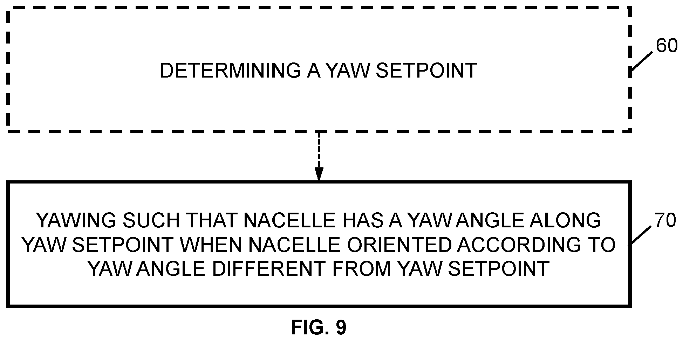

Figure 9 shows a method in accordance with some examples.

The method includes, in some examples, a step of determining 60 a first yaw setpoint, for example to a yaw setpoint configured to prevent and/or reduce vibrations and/or oscillations and/or mechanical stresses of at least one wind turbine(s) and/or components, which causes orientation or reorientation of a nacelle towards the yaw setpoint.

The method includes a step of yawing 70 the nacelle yaw system, which causes orientation or reorientation of the nacelle towards a yaw setpoint, such as yaw setpoint as determined 60 in the method in examples in which said determination is made; in some other cases, the yaw setpoint is already determined. The yawing 70 according to the yaw setpoint is conducted at least when the nacelle has a yaw angle different from the yaw setpoint and which could cause problems to the wind turbine. By yawing 70 the nacelle yaw system, the wind turbine(s) may be put in a configuration for protection thereof or of components thereof from vibrations and/or oscillations and/or mechanical stresses.

In some cases, the method of Figure 9 is conducted while the wind turbine(s) are in a pre-commissioning or commissioning state. The yawing 70 could additionally or alternatively be conducted prior to a non-operational period that makes yawing of the nacelle yaw system not possible.

The foregoing disclosure describes that nacelles and nacelles yaw systems of at least one wind turbine may be controlled in a particular way. It will be noted that, in some examples, in a given wind farm with multiple wind turbines, a subset or all wind turbines may be controlled in the disclosed manner using the same yaw setpoints (e.g., yaw setpoint, first yaw setpoint, second yaw setpoint), which may simplify control, especially when, e.g., the wind direction is substantially the same for all such wind turbines. Yet, in some other examples, in a given wind farm with multiple wind turbines, a subset or all wind turbines may be controlled in the disclosed manner using different yaw setpoints (e.g., yaw setpoint, first yaw setpoint, second yaw setpoint). The latter may be convenient when, e.g., a wind direction at the location of the different wind turbines is substantially different, and/or when operation of each wind turbine is bespoke and fine-tuned, thereby improving the performance and protection control of each wind turbine.

Although some examples and embodiments may include a particular sequence of operations, the sequence may in some cases be altered without departing from the scope of the present disclosure. For example, some of the operations depicted may be performed in parallel or in a different sequence that does not materially affect the functions as described in the examples; by way of example, steps as described with reference to the methods of Figures 3 and 4, according to some examples, may not follow the sequence depicted in the figures. In other examples, different components of an example device or system that implements an example method may perform functions at substantially the same time or in a specific sequence.

As used herein, the terms "processing device" and "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location, while in other examples the processors may be distributed across a number of locations.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific example(s) and embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method comprising:
yawing a nacelle yaw system of at least one wind turbine for orienting a nacelle of the at least one wind turbine according to a first yaw setpoint when the at least one wind turbine operates in a first operating mode, the first yaw setpoint being at least based on a wind direction at a location of the at least one wind turbine or a wind farm comprising the at least one wind turbine; and
yawing the nacelle yaw system for orienting the nacelle according to a second yaw setpoint when the at least one wind turbine operates in a second operating mode that precedes a non-operational period comprising unavailability for performing a yaw maneuver.

2. The method of claim 1, wherein the second yaw setpoint is configured to prevent at least one of vibrations and oscillations of at least a tower of the at least one wind turbine during the non-operational period.

3. The method of any one of the preceding claims, further comprising determining existence of the non-operational period.

4. The method of any one of the preceding claims, wherein the non-operational period comprises: maintenance stoppage of the at least one wind turbine, or a pre-commissioning stage of the at least one wind turbine, or existence of grid loss of the at least one wind turbine, or at least one predetermined weather condition or grid condition.

5. The method of any one of the preceding claims, wherein the second yaw setpoint is at least based on statistical wind direction data at the location and/or an estimation of a value of future wind direction data at the location during the non-operational period.

6. The method of claim 5, wherein the statistical wind direction data and the estimation of the value of the future wind direction data are based on a time period within the year corresponding to the time period within the year in which the non-operational period may potentially occur.

7. The method of any one of the preceding claims, wherein the second yaw setpoint is at least based on a duration of the non-operational period.

8. The method of any one of the preceding claims, further comprising switching operation of the at least one wind turbine between the first and second operating modes based on the non-operational period potentially taking place in a future time span starting in less than a predetermined time horizon.

9. The method of any one of the preceding claims, wherein yawing the nacelle yaw system according to the first yaw setpoint and/or yawing the nacelle yaw system according to the second yaw setpoint are/is triggered automatically by at least one processor.

10. The method of any one of claims 1-8, wherein yawing the nacelle yaw system according to the first yaw setpoint and/or yawing the nacelle yaw system according to the second yaw setpoint are/is triggered manually by at least one user.

11. A data processing device or system comprising means for carrying out the method of any one of the preceding claims.

12. A control system for at least one wind turbine comprising the data processing device or system of claim 11.

13. A wind turbine comprising:
a nacelle;
a nacelle yaw system configured to modify a yaw angle of the nacelle; and
the data processing device or system of claim 11 or the control system of claim 12.

14. A wind farm comprising:
a plurality of wind turbines, each wind turbine comprising a nacelle and a nacelle yaw system configured to modify a yaw angle of the nacelle of the respective wind turbine; and
at least one data processing device or system according to claim 11 or control system according to claim 12.

15. The wind farm of claim 14, wherein a single data processing device or system or control system of the at least one data processing device or system or control system is configured to control operation of nacelle yaw systems of a subset of wind turbines or all wind turbines of the plurality of wind turbines.
